# EUROPEAN PATENT APPLICATION

(11) **EP 2 378 094 A1**
(43) Date of publication of application: **19.10.2011**
(21) Application number: 10729264.1
(22) Date of filing: 08.01.2010
(51) Int. Cl.: F02B 23/08, F01N 3/08, F02D 19/02, F02D 19/08, F02M 21/02, F02M 37/00, F02P 3/01, F02P 15/02

(54) **AMMONIA-BURNING INTERNAL COMBUSTION ENGINE**

(30) Priority: 08.01.2009 JP 2009002809
(71) Applicant: Toyota Jidosha Kabushiki Kaisha, Toyota-shi, Aichi 471-8571 (JP)
(72) Inventor: KOJIMA, Susumu, Toyota-shi Aichi 471-8571 (JP); NAKAMURA, Norihiko, Toyota-shi Aichi 471-8571 (JP); SHIMIZU, Rio, Toyota-shi Aichi 471-8571 (JP); SUGIMOTO, Tomojiro, Toyota-shi Aichi 471-8571 (JP); KIM, Kyoung-oh, Toyota-shi Aichi 471-8571 (JP)
(74) Representative: TBK
(86) International application number: PCT/JP2010/050448
(87) International publication number: WO 2010/079846

(57) **Abstract**

An internal combustion engine in which ammonia which is fed into a combustion chamber (5) is ignited by an ignition device which is arranged in the combustion chamber (5). As this ignition device, at least one plasma jet ignition plug (6) which emits a plasma jet or a plurality of spark plugs (6') which generate sparks are used.

## Description

### Technical Field

The present invention relates to an ammonia burning internal combustion engine.

### Background Art

In an internal combustion engine, in the past, the fuel used has mainly been fossil fuels. However, in this case, burning such fuels produces CO₂, which causes global warming. On the other hand, burning ammonia does not produce CO₂ at all. Thus, there is known an internal combustion engine designed so as to use ammonia as fuel and not produce CO₂ (for example, see Patent Literature 1).

However, ammonia is harder to burn compared with fossil fuels. Therefore, when using ammonia as fuel, some sort of measure is required for making the ammonia easier to burn. Thus, in the above-mentioned internal combustion engine, exhaust heat is utilized to produce hydrogen from ammonia, the hydrogen produced from the ammonia is stored in a hydrogen storing alloy, the hydrogen produced from the ammonia or the hydrogen stored in the hydrogen storing alloy is fed into an auxiliary combustion chamber, and the hydrogen in the auxiliary combustion chamber is made to burn by a spark plug to thereby burn the ammonia gas in a combustion chamber.

### Citation List

### Patent Literature

Patent Literature 1: Japanese Patent Publication (A) No. 5-332152

### Summary of Invention

### Technical Problem

However, if using a hydrogen storing alloy, not only is there the problem that the weight becomes heavier, but also there is the problem that control for storing the hydrogen in the hydrogen storing alloy and control for releasing the stored hydrogen from the hydrogen storing alloy are necessary, so the system for treating the hydrogen becomes complicated.

### Solution to Problem

Therefore, in the present invention, there is provided an ammonia burning internal combustion engine designed to ignite ammonia fed into a combustion chamber by an ignition device which is arranged in the combustion chamber, wherein, as the ignition device, at least one plasma jet ignition plug which emits a plasma jet or a plurality of spark plugs which generate sparks are used.

### Advantageous Effects of Invention

When using a plasma jet ignition plug which emits a plasma jet, the surface area of the spark flame nucleus becomes larger, so the ammonia is made to easily burn, while when using a plurality of spark plugs which generate sparks, ignition flame nuclei are generated at a plurality of locations, so the ammonia is made to easily burn.

### Brief Description of the Drawings

FIG. 1 is an overall view of an internal combustion engine.
FIG. 2 is a side cross-sectional view of a front end of a plasma jet ignition plug.
FIG. 3 are views showing an ignition energy E.
FIG. 4 are bottom views of a cylinder head.
FIG. 5 is an overall view of another embodiment of an internal combustion engine.
FIG. 6 is a view showing an ignition energy E.
FIG. 7 are overall views of still another embodiments of an internal combustion engine.

### Description of Embodiments

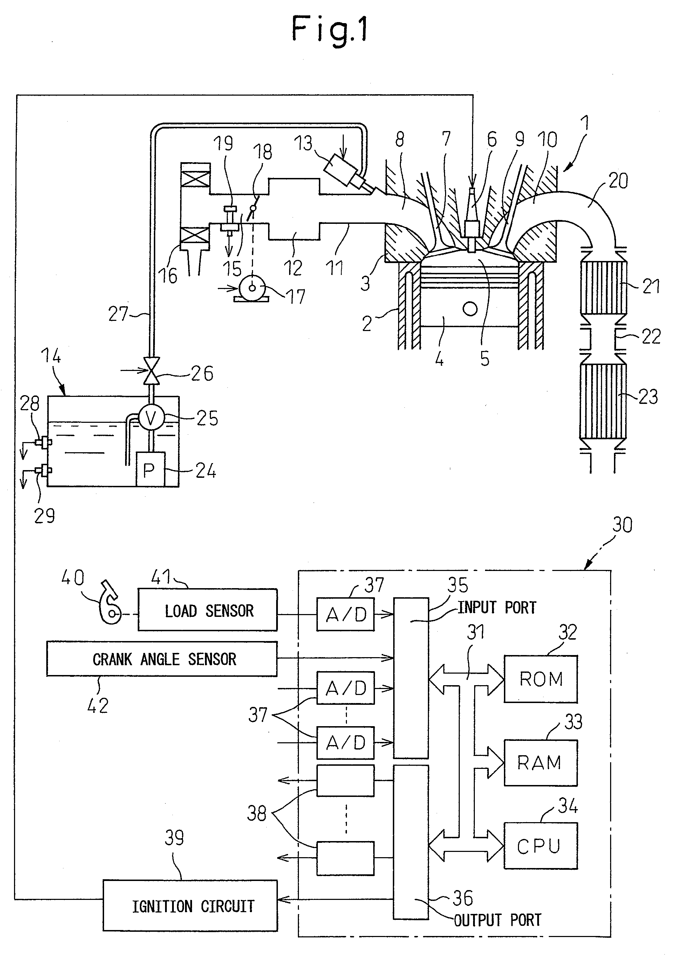

Referring to FIG. 1, 1 indicates an internal combustion engine body, 2 a cylinder block, 3 a cylinder head, 4 a piston, 5 a combustion chamber, 6 an ignition device which is arranged at the center of the top surface of the combustion chamber 5, 7 an intake valve, 8 an intake port, 9 an exhaust valve, and 10 an exhaust port. The intake port 8 is connected through an intake branch pipe 11 to a surge tank 12. In each intake branch pipe 11, a liquid ammonia injector 13 for injecting liquid ammonia toward the interior of each corresponding intake port 8 is arranged. This liquid ammonia injector 13 is fed with liquid ammonia from a fuel tank 14.

The surge tank 12 is connected through an intake duct 15 to an air cleaner 16. In the intake duct 15, a throttle valve 18 driven by an actuator 17 and an intake air amount detector 19 using for example a hot wire are arranged. On the other hand, the exhaust port 10 is connected through an exhaust manifold 20 to an ammonia adsorbent 21. The ammonia adsorbent 21 is connected through a gas pipe 22 to an ammonia purification catalyst 23 which can purify the ammonia contained in the exhaust gas.

The fuel tank 14 is filled inside it with high pressure liquid ammonia of 0.8 MPa to 1.0 MPa or so. Inside of this fuel tank 14, a fuel feed pump 24 is arranged. A discharge port of this fuel feed pump 24 is connected to the liquid ammonia injector 13 through a relief valve 25 which returns the liquid ammonia to the inside of the fuel tank 14 when the discharge pressure becomes a certain pressure or more, a shutoff valve 26 which opens when the engine is operating and which is closed when the engine is stopped, and a liquid ammonia feed pipe 27.

When the pressure inside the fuel tank 14 is a high pressure of 0.8 MPa to 1.0 MPa or so, the operation of the fuel feed pump 24 is made to stop. At this time, the liquid ammonia in the fuel tank 14 is fed to the liquid ammonia injector 13 by the pressure inside the fuel tank 14. On the other hand, for example, when the outside air temperature becomes low and the pressure inside the fuel tank 14 falls, the fuel feed pump 24 is used to feed liquid ammonia to the liquid ammonia injector 13. Note that, the fuel tank 14 is provided with a pressure sensor 28 for detecting the pressure inside the fuel tank 14 and a temperature sensor 29 for detecting the temperature of the liquid ammonia inside the fuel tank 14.

An electronic control unit 30 is formed by a digital computer and is provided with a ROM (read only memory) 32, a RAM (random access memory) 33, a CPU (microprocessor) 34, an input port 35, and an output port 36 which are connected to each other by a bi-directional bus 31. An output signal of the intake air amount detector 19, an output signal of the pressure sensor 28, and an output signal of the temperature sensor 29 are input to the input port 35 through corresponding AD converters 37. Further, an accelerator pedal 40 is connected to a load sensor 41 generating an output voltage proportional to the amount of depression of the accelerator pedal 40. The output voltage of the load sensor 41 is input through a corresponding AD converter 37 to the input port 35. Further, the input port 35 is connected to a crank angle sensor 42 generating an output pulse each time a crankshaft rotates by for example 30°. On the other hand, the output port 36 is connected to an ignition circuit 39 of the ignition device 6. Furthermore, the output port 36 is connected through corresponding drive circuits 38 to the liquid ammonia injector 13, the drive actuator 17 of the throttle valve, fuel feed pump 24, and shut-off valve 26.

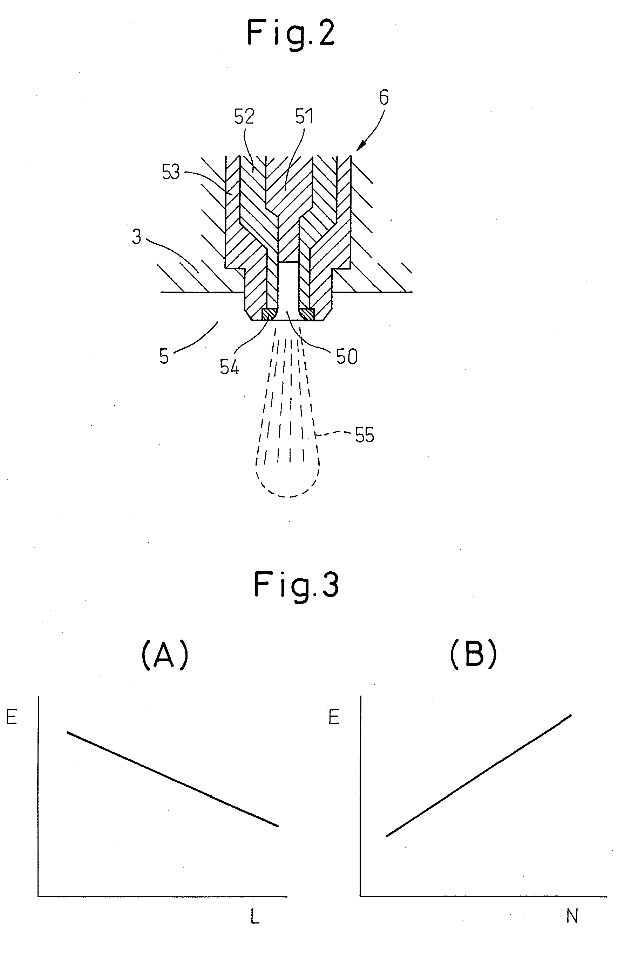

FIG. 1 shows the case of use of a plasma jet ignition plug as the ignition device 6, while FIG. 2 shows an example of the structure of the front end of this plasma jet ignition plug 6. In the example which is shown in FIG. 2, the plasma jet ignition plug 6 is provided with a discharge chamber 50 which is communicated with the inside of the combustion chamber 5, a center electrode 51 which is arranged deep inside the discharge chamber 50, an insulator 52 which surrounds the discharge chamber 50 and center electrode 51, a conductive casing 53 which surrounds the insulator 52, and a ground electrode 54 which is arranged around the open end of the discharge chamber 50. If applying a high voltage between the center electrode 51 and the ground electrode 54 and thereby causing discharge in the air between the center electrode 51 and the ground electrode 54, high temperature, high pressure plasma gas is produced inside the discharge chamber 50 and, as a result, a plasma jet 55 comprised of this plasma gas is injected from the discharge chamber 50 to the inside of the combustion chamber 5.

Now then, at the time of engine operation, liquid ammonia is injected from the liquid ammonia feed valve 13 to the inside of the intake port 8 at each cylinder. At this time, the liquid ammonia which is injected from the liquid ammonia injector 13 is vaporized by boiling under reduced pressure just when being injected. In this regard, the latent heat of vaporization of the liquid ammonia is a latent heat of vaporization of about four times that of for example gasoline, that is, is extremely large. Therefore, if the liquid ammonia vaporizes, the temperature of the intake air which is fed into the combustion chamber 5 drops considerably. As a result, the density of the intake air which is fed into the combustion chamber 5 becomes higher and the volume efficiency is raised, so the engine output is improved. Note that, when trying to inject liquid ammonia in this way, there is also the advantage that it is not necessary to provide the vaporizer which is required when trying to inject gaseous ammonia.

The ammonia which is vaporized inside the intake port 8 is fed inside of the combustion chamber 5 in the form of gaseous ammonia. The gaseous ammonia which is fed inside of the combustion chamber 5 is ignited in the second half of the compression stroke by the plasma jet 55 which is ejected from the plasma jet ignition plug 6. As will be understood from FIG. 2, the outer surface area of the plasma jet 55, that is, the surface area of the ignition flame nucleus, is considerably large, so the gaseous ammonia in the combustion chamber 5 is ignited at innumerable points on the outer surface of the plasma jet 55 and therefore even the inherently hard to ignite ammonia is easily ignited.

Further, ammonia has a slow flame propagation speed, therefore, compared with the case of using gasoline as a fuel, the optimal ignition timing becomes the advanced side. Further, this optimal ignition timing becomes more to the advanced side the higher the engine speed, so at the time of engine high speed operation, whether it is possible to ignite at the timing when the ammonia can be ignited becomes the issue. However, if using a plasma jet ignition plug 6, the combustion timing of the gaseous ammonia as a whole becomes shorter and therefore even at the time of engine high speed operation, the gaseous ammonia can be ignited well and can be ignited at a timing enabling good combustion.

If the gaseous ammonia is completely burned, theoretically it becomes N₂ and H₂O, that is, no CO₂ is produced at all. However, in actuality, unburned ammonia remains and therefore unburned ammonia is exhausted from the combustion chamber 5. Therefore, inside the engine exhaust passage, the ammonia purification catalyst 23 which can purify the unburned ammonia contained in the exhaust gas is arranged.

However, at the time of engine startup etc. when the temperature of the ammonia purification catalyst 23 is low, so the ammonia purification catalyst 23 is not activated, it is not possible to purify the unburned ammonia which is exhausted from the engine. Therefore, in an embodiment of the present invention, the ammonia adsorbent 21 which can adsorb the ammonia contained in exhaust gas and releases the adsorbed ammonia when the temperature rises is arranged in the engine exhaust passage upstream of the ammonia purification catalyst 23.

Therefore, in an embodiment of the present invention, at the time of engine startup etc. when the ammonia purification catalyst 23 is not activated, the unburned ammonia which is exhausted from the engine is adsorbed at the NOₓ adsorbent 21. Next, when the temperature of the NOₓ adsorbent 21 and ammonia purification catalyst 23 rises, the adsorbed ammonia is released from the NOₓ adsorbent 21. Around when the temperature of the NOₓ adsorbent 21 rises to the temperature for starting release of adsorbed NOₓ, the ammonia purification catalyst 23 is already activated, therefore, the ammonia which is released from the NOₓ adsorbent 21 is purified by the ammonia purification catalyst 23. If arranging the NOₓ adsorbent 21 upstream of the ammonia purification catalyst 23 in this way, it is possible to purify the unburned ammonia which is exhausted from the engine in the interval from when the engine is started to when the engine is stopped.

This ammonia purification catalyst 23 is comprised of one or both of an oxidation catalyst which can oxidize the ammonia and an NOₓ selective reduction catalyst which can selectively reduce the NOₓ which is contained in the exhaust gas in the presence of ammonia. When the ammonia purification catalyst 23 is comprised of an oxidation catalyst, the unburned ammonia which is exhausted from the engine is oxidized at the oxidation catalyst and therefore unburned ammonia is kept from being exhausted to the atmosphere.

On the other hand, even when ammonia is made to burn, NOₓ is produced. Therefore, the exhaust gas which is exhausted from the engine contains NOₓ. Further, the exhaust gas contains unburned ammonia, so if using the NOₓ selective reduction catalyst as the ammonia purification catalyst 23, the NOₓ in the exhaust gas is reduced by the unburned ammonia in the exhaust gas at the NOₓ selective reduction catalyst. At this time, the unburned ammonia is oxidized. That is, if using an NOₓ selective reduction catalyst, both the NOₓ and unburned ammonia in the exhaust gas can be purified. Therefore, the NOₓ selective reduction catalyst can be said to be extremely suitable as the exhaust purification catalyst of an ammonia burning internal combustion engine.

In this regard, to ignite the gaseous ammonia in the combustion chamber 5 well, an ignition energy greater in size the lower the temperature of the gaseous ammonia at the time of ignition becomes necessary. That is, the ignition energy is preferably controlled in accordance with the operating state of the engine. Therefore, in an embodiment of the present invention, as shown in FIG. 3(A), the more the engine load L falls, the more the ignition energy E is increased and, as shown in FIG. 3(B), the higher the engine speed N becomes, the more the ignition energy E is increased.

That is, the more the engine load L falls, the smaller the opening degree of the throttle valve 18 is made, so the compression end pressure inside of the combustion chamber 5 becomes lower the more the engine load L falls. Therefore, the temperature of the gaseous ammonia in the combustion chamber 5 at the end of the compression stroke in which ignition is performed becomes lower the more the engine load L falls, therefore, as shown in FIG. 3(A), the ignition energy E of the ignition device 6 is increased if the engine load L falls.

On the other hand, the ignition timing is made earlier the higher the engine speed N, therefore, the pressure inside of the combustion chamber 5 at the time of ignition becomes lower the higher the engine speed N becomes. Therefore, the temperature of the gaseous ammonia inside the combustion chamber 5 when ignition is performed becomes lower the higher the engine speed N, therefore, as shown in FIG. 3(B), the ignition energy E of the ignition device 6 is increased the higher the engine speed N. Note that, in the embodiment shown in FIG. 1, the ignition energy by the plasma jet ignition plug 6 is controlled by using the ignition circuit 39 to control the discharge current of the plasma jet ignition plug 6.

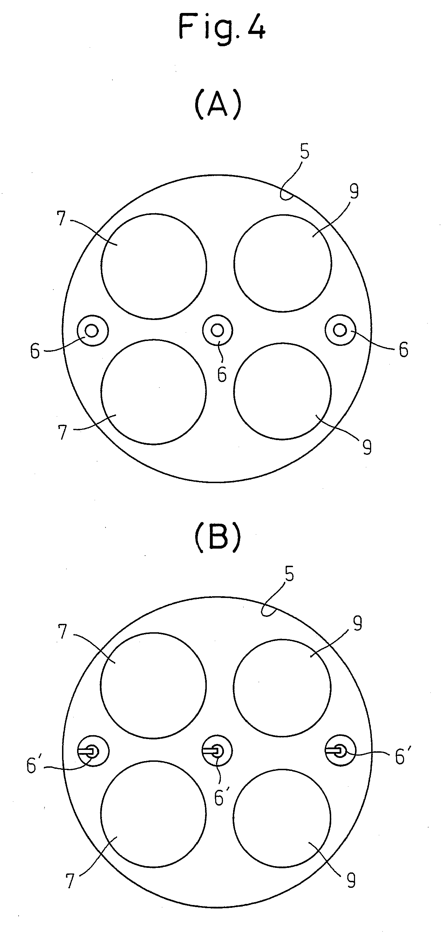

On the other hand, the gaseous ammonia inside of the combustion chamber 5 becomes easier to ignite the higher the ignition energy. Therefore, in the example shown in FIG. 4(A), a plurality of plasma jet ignition plugs 6 are arranged inside the combustion chamber 5. Further, even when using spark plugs which generate sparks, if providing a plurality of spark plugs, the gaseous ammonia is ignited at a plurality of points and therefore even the inherently difficult to ignite ammonia is easily ignited. Therefore, in the example shown in FIG. 4(B), a plurality of spark plugs 6' which generate sparks are arranged inside the combustion chamber 5.

That is, in the present invention, the ammonia which is fed into the combustion chamber 5 is ignited by an ignition device 6 which is arranged in the combustion chamber 5. In this case, as shown in FIG. 1, FIG. 4(A), and FIG. 4(B), as the ignition device, at least one plasma jet ignition plug 6 which emits a plasma jet or a plurality of spark plugs 6' which generate sparks are used.

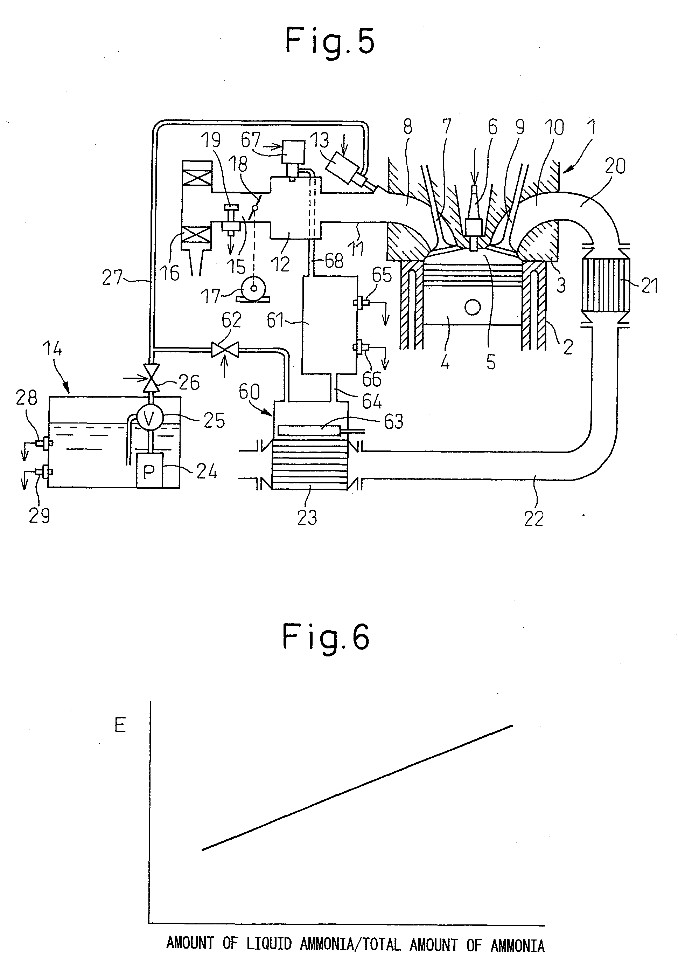

In this regard, as shown in FIG. 1, if using liquid ammonia as the fed fuel, when the engine temperature is low, in particular at the time of low temperature start of the engine, the liquid ammonia will be insufficiently vaporized and as a result there will be the danger of an increase in the amount of emission of unburned ammonia. Therefore, in the embodiment shown in FIG. 5, in addition to the liquid ammonia feed valve 13, a gaseous ammonia feed system for feeding gaseous ammonia into the intake air is provided.

That is, if referring to FIG. 5, this gaseous ammonia feed system is provided with an ammonia vaporization device 60 for vaporizing the liquid ammonia and an ammonia gas tank 61 for storing the vaporized gaseous ammonia. The gaseous ammonia inside of the ammonia gas tank 61 is fed into the intake air. As shown in FIG. 5, the ammonia vaporization device 60 is connected through a control valve 62 for controlling the flow rate to the liquid ammonia feed pipe 27 between the liquid ammonia injector 13 and the shutoff valve 26. Therefore, the liquid ammonia is fed through the control valve 62 to the inside of the ammonia vaporization device 60.

The ammonia vaporization device 60 utilizes the heat of the exhaust gas to promote the vaporization of the liquid ammonia. For this, it is arranged inside of the engine exhaust passage or adjoining the engine exhaust passage, for example, adjoining the ammonia purification catalyst 23. Further, this ammonia vaporization device 60 is provided with an electric heater 63 so as to enable vaporization of the liquid ammonia even when the temperature of the exhaust gas is low. The ammonia which is vaporized inside of the ammonia vaporization device 60 is fed through a feed pipe 64 to the inside of the ammonia gas tank 61 and therefore the inside of the ammonia gas tank 61 is filled by the gaseous ammonia.

As shown in FIG. 5, the ammonia gas tank 61 is provided with a gas pressure sensor 65 and a gas temperature sensor 66 for detecting the pressure and temperature in the ammonia gas tank 61. The control valve 62 is controlled so that the gas pressure inside the ammonia gas tank 61 becomes a target gas pressure set in advance. In the embodiment shown in FIG. 5, a gaseous ammonia injector 67 is arranged in the surge tank 12. This gaseous ammonia injector 67 is fed with gaseous ammonia in the ammonia gas tank 61 through a feed pipe 68. Therefore, in this embodiment, gaseous ammonia is injected from the gaseous ammonia injector 67 to the inside of the surge tank 12 in accordance with need.

Whether to inject ammonia from one or both of the liquid ammonia injector 13 and the gaseous ammonia injector 67 and the ratio of injection of ammonia when injecting ammonia from both the liquid ammonia injector 13 and the gaseous ammonia injector 67 are determined in accordance with the operating state of the engine. For example, at the time of low temperature startup of the engine, ammonia is injected from only the gaseous ammonia injector 67. When the engine temperature rises, ammonia starts to be injected from the liquid ammonia injector 13 as well. Further, at the time of high load operation when a high output is required, ammonia is injected from only the liquid ammonia injector 13.

In this regard, if liquid ammonia is injected, the latent heat of vaporization of the liquid ammonia causes the intake air temperature to fall and therefore the ammonia becomes harder to ignite. Therefore, in an embodiment of the present invention, when liquid ammonia and gaseous ammonia are fed into the intake air, the drop in the intake air temperature due to the latent heat of vaporization of the liquid ammonia is considered and the ignition energy of the ignition device 6 is changed in accordance with the ratio of the amount of liquid ammonia which is fed into the intake air and the amount of gaseous ammonia which is fed into the intake air.

In this case, to secure good ignition, it is preferable to increase the ignition energy the greater the ratio of the liquid ammonia. Therefore, in an embodiment of the present invention, as shown in FIG. 6, the more the ratio of the amount of liquid ammonia to the total amount of ammonia which is fed into the intake air, the more the ignition energy E of the ignition device 6 is increased.

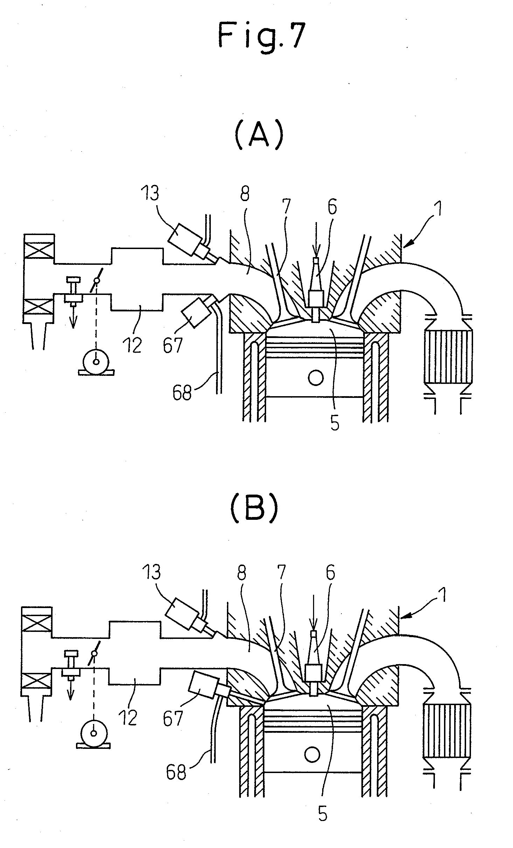

Further, instead of being arranged in the surge tank 12 as shown in FIG. 5, the gaseous ammonia injector 67 may also be arranged at the intake port 8 of each of the cylinders as shown in FIG. 7(A) or may be arranged in the combustion chamber 5 of each of the cylinders 5 as shown in FIG. 7(B).

### Reference Signs List

- 5: combustion chamber
- 6: plasma jet ignition plug
- 7: intake valve
- 8: intake port
- 13: liquid ammonia injector
- 14: fuel tank
- 21: ammonia adsorbent
- 23: ammonia purification catalyst

## Claims

1. An ammonia burning internal combustion engine designed to ignite ammonia fed into a combustion chamber by an ignition device which is arranged in the combustion chamber, wherein, as the ignition device, at least one plasma jet ignition plug which emits a plasma jet or a plurality of spark plugs which generate sparks are used.

2. An ammonia burning internal combustion engine as claimed in claim 1, wherein an ignition energy of said ignition device is increased if an engine load falls.

3. An ammonia burning internal combustion engine as claimed in claim 1 or 2, wherein an ignition energy of said ignition device is increased if an engine speed becomes higher.

4. An ammonia burning internal combustion engine as claimed in claim 1, wherein an ammonia purification catalyst able to purify ammonia contained in exhaust gas is arranged in an engine exhaust passage, and an ammonia absorbent able to adsorb ammonia which is contained in exhaust gas and releasing an adsorbed ammonia when a temperature rises is arranged in the engine exhaust passage upstream of the ammonia purification catalyst.

5. An ammonia burning internal combustion engine as claimed in claim 4, wherein said ammonia purification catalyst is comprised of one or both of an oxidation catalyst able to oxidize ammonia and an NOₓ selective reduction catalyst able to selectively reduce NOₓ which is contained in the exhaust gas in the presence of ammonia.

6. An ammonia burning internal combustion engine as claimed in claim 1, wherein liquid ammonia is fed into an intake air.

7. An ammonia burning internal combustion engine as claimed in claim 6, wherein a liquid ammonia injector for feeding liquid ammonia into the intake air and a gaseous ammonia feed system for feeding gaseous ammonia into the intake air are provided.

8. An ammonia burning internal combustion engine as claimed in claim 7, wherein said gaseous ammonia feed system is provided with an ammonia vaporization device for vaporizing liquid ammonia and an ammonia gas tank for storing a vaporized gaseous ammonia, and the gaseous ammonia in the ammonia gas tank is fed into the intake air.

9. An ammonia burning internal combustion engine as claimed in claim 7, wherein an ignition energy of said ignition device is changed in accordance with a ratio of an amount of liquid ammonia which is fed into the intake air and an amount of gaseous ammonia which is fed into the intake air.

10. An ammonia burning internal combustion engine as claimed in claim 9, wherein the more the ratio of the amount of liquid ammonia to the total amount of ammonia which is fed into the intake air increases, the more the ignition energy of the ignition device is increased.
